# EUROPEAN PATENT SPECIFICATION

(11) **EP 1 062 736 B1**
(45) Date of publication and mention of the grant of the patent: **15.11.2006**
(21) Application number: 98960069.7
(22) Date of filing: 16.12.1998
(51) Int. Cl.: H04B 10/10

(54) **Network-communications link**
Netzwerk-Kommunikationsverbindung
Liaison de communications réseau

(30) Priority: 17.12.1997 US 992934; 15.07.1998 IL 12537498
(43) Date of publication of application: 27.12.2000
(73) Proprietor: Infra-Com Ltd., 42135 Netanya (IL)
(72) Inventor: Infra-Com Ltd., 42135 Netanya (IL)
(74) Representative: Evens, Paul Jonathan
(86) International application number: PCT/IL1998/000612
(87) International publication number: WO 1999/031814

(56) References cited:
- WO-A-96/11536
- US-A- 4 977 619
- US-A- 5 276 703
- US-A- 5 724 106
- US-A- 5 857 760
- MARSH G W ET AL: "Channel reuse strategies for indoor infrared wireless communications" GLOBAL TELECOMMUNICATIONS CONFERENCE, 1996. GLOBECOM '96. 'COMMUNICATIONS: THE KEY TO GLOBAL PROSPERITY LONDON, UK 18-22 NOV. 1996, NEW YORK, NY, USA,IEEE, US, 18 November 1996 (1996-11-18), pages 1597-1602, XP010220287 ISBN: 0-7803-3336-5
- PAHLAVAN KAVEH et al., "Wiley Series in Telecommunication and Signal Processing", WIRELESS INFORMATION NETWORKS, 1995, page 422, XP002918722

## Description

### FIELD OF THE INVENTION

The present invention relates generally to communication networks, and specifically to wireless communication networks based on infrared radiation.

### BACKGROUND OF THE INVENTION

The Internet is the world's fastest developing mass media channel. Not only are increasing numbers of home computer users using the Internet, but most major television manufacturers are also developing or introducing Internet-connectable television sets. Since Internet connections are made primarily over telephone lines, any Internet-connectable device, whether a television or a conventional computer, must generally be placed in proximity to an existing telephone outlet, or telephone wires must be run to the location of the device.

Wireless computer communication devices and systems are known in the art. For example, cellular modems may be used without the need for telephone wires, but such modems are expensive both to purchase and to use. Elcom Technologies, of Canada, has recently announced the "EZONLINE" modem, which operates by modulating AC power lines, but this new technology is not yet widely used or available, nor is it really wireless, since it simply uses the AC lines in place of the telephone wires.

A number of industry standards have also been developed for wireless infrared (IR) computer communications, including ASK, IrDA 1.0/1.1 and new, emerging standards, such as an IR bus for control of computer peripherals. Existing IR wireless communications links generally operate at low speed, however, and carry only limited digital signals, rather than video and voice information. A clear line of sight (LOS) is generally required between the two ends of the link.

Computer local area networks (LANs) based on diffuse infrared transmission are also known in the art, for example, the ControLan System, produced by Moldat of Lod, Israel, and the AndroDat System produced by Androdat GmbH ofPuchheim, Germany. Diffuse signals, in contrast to direct signals, are transmitted in all directions, and therefore can create a communication link with any receiver within a given radius of the transmitter. However, the above-mentioned diffuse IR systems require ceiling-mounted relay units, which need to be fixedly mounted and connected to a source of electrical power. Generally speaking, they are not suited for connection of a single computer or Internet-enabled television to a communication line in a home or small office.

International Patent publication WO 96/11536 discloses a wireless communication link according to the pze-characterizing portion of claim 1.

### SUMMARY OF THE INVENTION

Aspects of the present invention are defined in the appendant independent claims to which reference should now be made. Embodiments of the invention are defined in the appendant dependent claims to which reference should now also be made.

In preferred embodiments of the present invention, the communications link allows The audiovisual device or devices to receive and send signals over the communications line, without any wired connection to a telephone line. A peripheral device may be connected to at least one remote unit and may be used to control and interact with the audiovisual device, similarly without the need for a wired connection therewith.

Unlike IR data links known in the art, the communications link of the present invention operates at high speed, preferably between 192 kbps and 2 Mbps, most preferably at least I Mbps, suitable for interactive multimedia transmission The link may therefore be used to couple the audiovisual device to a network, such as the Internet, via the telephone line or other suitable data line, including ISDN and PSTN lines, as are known in the art: The link is also suitable for conveying voice communications, and can operate at lower bit rates, as well, dependent on application requirements.

Furthermore, because the link is based on transmission and reception of diffuse IR radiation, there need not be a clear line of sight between the base and remote units. The radiation transmitted by one of the units is received by the other unit after reflection (generally diffuse reflection) from one or more surfaces in a vicinity of the units. The link is preferably used in an enclosed, indoor area, in which the IR radiation is reflected from the walls and ceiling of the area. There is no need for IR relay units mounted on the ceiling or on other surfaces, as in diffuse IR systems known in the art, and no requirement for any special wiring or installation. In the context of the present patent application and in the claims, diffuse IR links of this type are also referred to as omni-directional IR links.

In some preferred embodiments of the present invention, the base unit is fixed to a telephone wall outlet, and one of the one or more remote units is fixed to a personal computer (PC) or an Internet-enabled television set. The communications link enables a user of the PC or television set to connect to a computer network, preferably the Internet, and to browse and view multimedia programs transmitted on the network.

Although in some preferred embodiments, only a single remote unit may be used, in other preferred embodiments of the present invention, the link connects the base unit with multiple remote units simultaneously. The base unit may communicate with the multiple remote units one at a time, in sequence, or over multiple, parallel channels. One of the units, preferably one of the remote units that is connected to a PC or Internet-enabled television, is assigned to serve as a master unit, which synchronizes and monitors transmissions from the other units. Preferably, each of the units transmits during a predetermined time slot, in accordance with a time-division multiple access (TDMA) scheme. In this manner, multiple units, preferably up to four units, but alternatively even greater numbers of units, can be linked simultaneously substantially without mutual interference. It will be understood, however, that analog communications and other digital communications schemes, as are known in the art, may also be used.

Although preferred embodiments are described herein with reference to certain types of audiovisual devices and their connection primarily to telephone communication lines, it will be appreciated that the principles of the present invention may similarly be applied to produce wireless, diffuse IR communication links for other purposes. For example, such communications links may be used to connect a cordless telephone handset to a receiver, or to connect a portable Personal Digital Assistant (PDA) to a desktop computer, or to connect a digital camera to a PC or a printer. Further applications of such IR communication links include interactive remote communication with and control of electric-powered toys, video and audio equipment, and home appliances and utility systems. IR communication links in accordance with the principles of the present invention may carry either digital or analog data, and may operate in either half-duplex or full-duplex mode.

Preferably, the at least one remote unit includes a plurality of remote units. Preferably, the base unit and the plurality of remote units are configured to communicate using a TDMA scheme.

In a preferred embodiment, a peripheral device is connected to one of the plurality of remote units. Preferably, the peripheral device includes a user interface device. Alternatively or additionally, the peripheral device includes a digital camera.

Preferably, the audiovisual device includes a web-enabled television, or a personal computer, or a personal digital assistant.

Preferably, the wired line is configured to couple the base unit to a telephone network and/or to the Internet.

In a preferred embodiment the base unit and the at least one remote unit are configured to transmit and receive data at a rate greater than or equal to 1 Mbps. Preferably the base unit and the at least one remote unit are configured to transmit and receive data in a half-duplex mode, or, alternatively, in a full-duplex mode.

The present invention will be more fully understood from the following detailed description of the preferred embodiments thereof, taken together with the drawings in which:

### BRIEF DESCRIPTION OF THE DRAWINGS

Fig 1 is a schematic, pictorial illustration showing a wireless communications link in accordance with a preferred embodiment of the present invention;
Fig. 2 is a schematic, pictorial illustration showing a wireless communication, link in accordance with another preferred embodiment of the present invention;
Fig. 3A is a schematic block diagram of a base unit in the link of Fig. 1, in accordance with a preferred embodiment of the present invention;
Fig. 3B is a schematic block diagram of a remote unit in the link of Fig. 1, in accordance with a preferred embodiment of the present invention;
Fig. 3C is a schematic block diagram of another remote unit in the link of Fig. 1, in accordance with a preferred embodiment of the present invention;
Fig. 4 is a schematic timing diagram illustrating a time-division multiple access (TDMA) scheme used in the link of Fig. 1, in accordance with a preferred embodiment of the present invention;
Fig. 5A is a schematic block diagram of a base unit in the link of Fig. 2, in accordance with an alternative embodiment of the present invention;
Fig. 5B is a schematic block diagram of a remote unit in the link of Fig. 2, in accordance with an alternative embodiment of the present invention;
Fig. 5C is a schematic timing diagram illustrating a time-division multiple access (TDMA) scheme for use with the base and remote units of Figs. 5A and 5B, in accordance with a preferred embodiment of the present invention;
Fig. 6A is a schematic illustration of an optical receiver, for use in the base and remote units of Figs. 5A and 5B, in accordance with a preferred embodiment of the present invention; and
Fig. 6B is a schematic illustration of an optical receiver, for use in the base and remote units of Figs. 5A and 5B, in accordance with another preferred embodiment of the present invention.

### DETAILED DESCRIPTION OF PREFERRED EMBODIMENTS

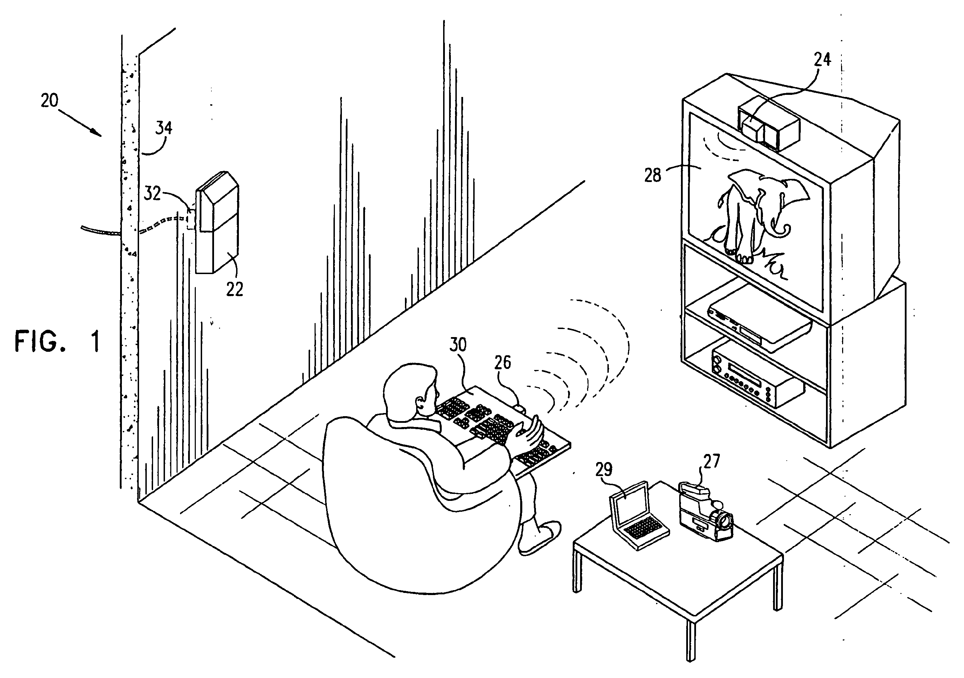

Reference is now made to Fig. 1, which is an illustration of a network communications link 20, in accordance with a preferred embodiment of the present invention Link 20 comprises a base unit 22, which transmits and receives modulated diffuse IR radiation to/from remote units 24 and 26. Remote unit 24 is preferably located on, or built into a web-enabled television 28. Remote unit 26 is preferably located in or fixed to a keyboard 30.

Alternatively or additionally, base unit 22 may transmit and receive radiation to/from remote units located on or built into a digital camera 27 or a personal data assistant 29. Camera 27 may comprise either a video camera or a digital still camera. It will be appreciated that link 20 may also be used to convey data, including audio, video and control signals, between camera 27 and television 28, or equivalently between the camera and a personal computer or any other suitable peripheral devices, such as a printer, a database, or another camera or media.

Link 20 enables a user of television 28 to communicate over the Internet or other computer network through base unit 22. The term "web-enabled" as used herein means that the television includes circuitry for computer network communications, using the television screen as a computer monitor. Furthermore, with appropriate modifications, the link can be used as well for interactive, bi-directional communications and control not only of television 28, but also of other systems in the home, such as video, audio and home appliances, using either keyboard 30 or another suitable remote control or console. The link and console can be adapted to communicate with and control various elements of a home audiovisual system, including an amplifier, equalizer, speakers, CD, DVD and MD players, tape recorder, etc.

It is noted that although in Fig. 1 the remote units are in the preferred form of printed circuit boards installed in television 28 and keyboard 30, the remote units may also be fabricated in different forms. Other preferred forms include external assemblies that can be plugged into the television, keyboard or other remote device.

Base unit 22 is connected to a wired communication line 32, preferably a telephone wire, located in a wall 34. In the present invention, base unit 22 communicates with remote units 24 and 26 via diffuse IR radiation, and therefore the location of base unit 22 on wall 34 does not have to be in the line of sight (LOS) of remote units 24 and 26. The wireless communication link may be created by the reflection of the diffuse IR radiation from wall 34, or from other surfaces within a radius of several meters at least.

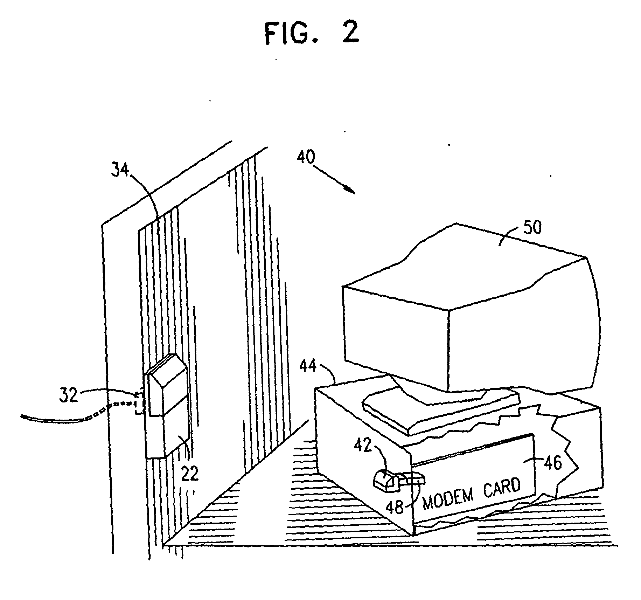

Fig. 2 is an illustration of a network communications link 40 in accordance with another preferred embodiment of the present invention. Base unit 22 transmits and receives modulated diffuse IR radiation to/from remote unit 42. Remote unit 42 preferably connects to a connector 48 located on a modem card 46, installed in a personal computer 50. Base unit 22 is connected to a wired communication line, substantially as described above. In this case, link 40 enables a user of computer to communicate over a computer network. Remote unit 42 is preferably self-contained and plugs into connector 48 on the rear panel of the computer, as shown in the figure.

It will be understood that although remote unit 42 is shown in Fig. 2 as an external plug-in to computer 50, the elements of the remote unit may also be built into the computer case, with only a suitable IR-transparent window left open to communicate with base unit 22. Furthermore, base unit 22 itself preferably includes a modem for telephone communications, and it is not necessary that remote unit 42 be connected to a modem in the computer. The remote unit may thus be coupled to any suitable communications port on the computer or motherboard or on one of the computer's expansion cards, for example, to one of the standard serial or parallel communications ports, USB, etc.

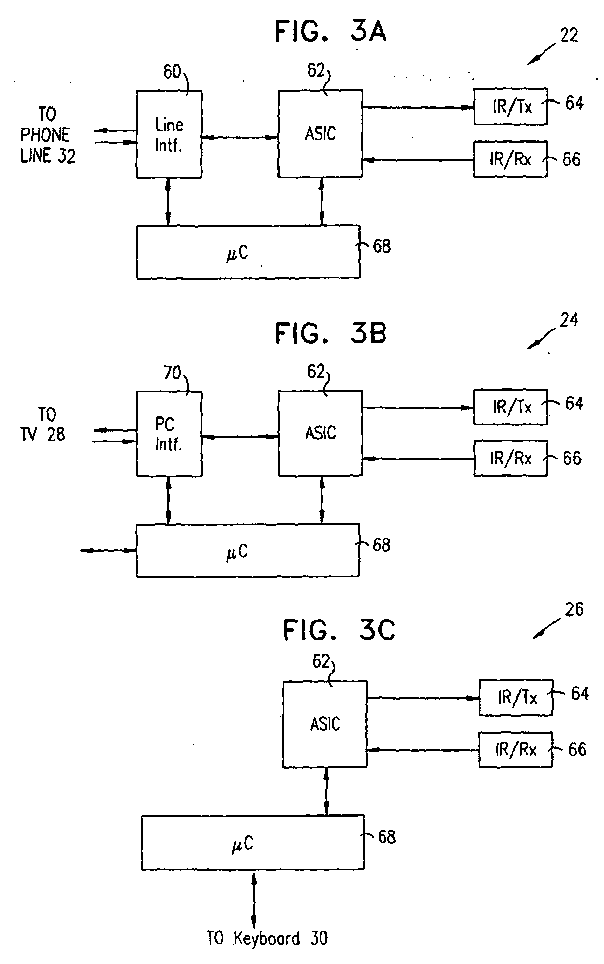

Fig. 3A is a schematic block diagram of base unit 22. Wired communication line 32 is linked to a line interface chip 60, for example, a Cermtec DAA model CH1837, in the base unit. Chip 60 receives and demodulates electrical signals from line 32, as is well known in the communications art, and conveys the demodulated signals to an ASIC chip 62. ASIC 62 preferably comprises a FPGA, and includes a CODEC and modulator and demodulator blocks. Such blocks are known in the art, and the design and production of ASIC 62 are within the capabilities of those skilled in the art of semiconductor devices. ASIC 62 encodes the electrical signals from chip 60 as pulses which drive an IR transmitter 64, which preferably comprises an LED with suitable driver circuitry. The IR signals transmitted by transmitter 64 are received by remote units 24 and 26, as described below.

Unit 22 further includes an IR receiver 66, comprising a photodiode with suitable optics for receiving diffuse IR signal from remote units 24 and 26. ASIC 62 receives electrical signals from receiver 66, decodes these signals and conveys them to chip 60. The chip generates appropriately modulated signals for transmission over line 32.

The transmission and reception of the data by chip 60 and ASIC 62 are controlled by a microcontroller 68, which performs line switching and signaling functions. Microcontroller preferably comprises a Philips 8051 microcontroller chip. Alternatively, the microcontroller may be embedded in ASIC 62. Unit 22 is preferably powered by rechargeable batteries (not shown in the figure), which are preferably recharged from the telephone line power.

Fig. 3B is a schematic block diagram of remote unit 24. Remote unit 24, in its preferred configuration, comprises a printed circuit card which is installed in an audiovisual device, such as television 28.

The circuitry of television 28, preferably personal computer circuitry embedded in the television, connects to a personal computer (PC) interface chip 70 in unit 24. Chip 70 may be identical to line interface chip 60, shown in Fig. 3A, and interacts with ASIC 62 and microcontroller 68 in a manner substantially similar to that described in detail above with reference to chip 60 in unit 22.

Fig. 3C is a schematic block diagram of remote unit 26. Remote unit 26, in its preferred configuration, comprises a printed circuit card which is installed in a peripheral device, such as keyboard 28. ASIC 62, located on unit 26, communicates with IR transmitter 64 and IR receiver 66 in a manner similar to that described in detail above. Microcontroller 68 receives user input data from keyboard 30 in a manner well known in the art, and conveys the data to ASIC 62 for transmission via transmitter 64, as described above.

In an alternative preferred embodiment, the functions of some or all of the components in units 22, 24 and 26, including chip 60, ASIC 62, IR transmitter 64, IR receiver 66, microcontroller 68 and chip 70, may be incorporated into one device or component, and relevant modules in that device may be enabled as applicable.

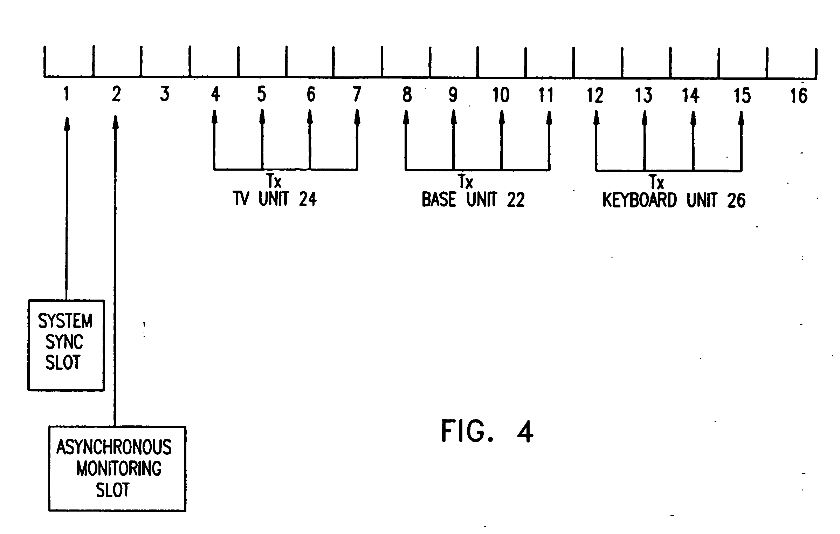

Fig. 4 is a schematic timing diagram representing a time-division multiple access (TDMA) scheme, or time sequencing, for transmission and reception of IR signals by units 22, 24 and 26 making up link 20, in accordance with a preferred embodiment of the present invention. As shown in Fig. 4, each communication frame is divided into multiple time slots. Preferably, the data transmission rate is between 192 kbps and 2 Mbps, although lower and higher bit rates may also be used. In the example shown in the figure, there are 16 time slots in a frame, the transmission rate is 1.024 Mbps, and each slot includes 64 bytes of data. Thus, each slot occupies 0.5 msec, and the frame length is 8 msec. Other data rates and TDMA schemes may also be used, however. The TDMA scheme facilitates orderly data transfer over link 20, with as many as four different transmit/receive units operating simultaneously, and avoids data/communication overlap among the units. It will be understood, however, that the units making up link 20 may also communicate using analog or other digital communications schemes, as are known in the art.

One unit, preferably unit 24, connected to the computer acts as the master, with all the other units as slaves. Unit 24 issues a System Sync signal during the first slot, which synchronize the other (slave) units. The slave units, which are normally in a low-power standby mode, use the second time slot to signal master unit 24 to enter an active communication mode. Slots 4, 5, 6 and 7 are allotted for master unit 24 to transmit signals to the slaves. During times other than the allotted time, unit 24 receives signals from units 22 and 26. Unit 22 is slotted to transmit in slots 8, 9, 10 and 11, and similarly, keyboard unit 26 slotted in slots 12, 13, 14 and 15.

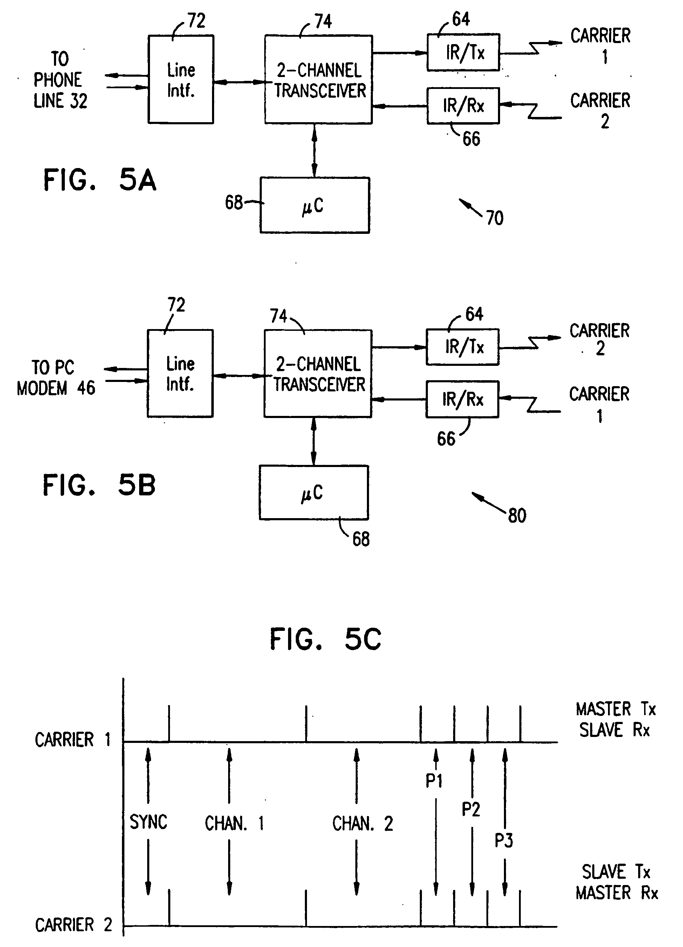

Figs. 5A and 5B are schematic block diagrams illustrating a base unit 70 and a remote unit 80, respectively, in accordance with an alternative embodiment of the present invention. Base unit 70 and remote unit 80 may be used, for example, in place of base unit 22 and remote unit 42, respectively, in link 40, as shown in Fig. 2. Units 70 and 80 each comprise a line interface chip 72, which is preferably of a type suitable for interfacing to a PSTN telephone line, as is known in the art. Each of units 70 and 80 also comprises a two-channel, full-duplex analog transceiver 74, coupled to IR transmitter 64 and IR receiver 66 and controlled by microprocessor 68. These transceivers enable units 70 and 80 to communicate with one another over a full-duplex analog link at two carrier frequencies (CARRIER 1 and CARRIER 2 in the figure), preferably between 2 and 10 MHz, for example, 3.6 and 4.0 MHz.

Fig. 5C is a schematic timing diagram representing a full-duplex TDMA scheme based on carrier wave modulation, for transmission and reception of IR signals by units 70 and 80, in accordance with a preferred embodiment of the present invention. One of the units, for example, unit 70, is chosen to be the master unit, and transmits signals over CARRIER 1 while receiving signals over CARRIER 2. The other unit, in this case unit 80, functions as a slave, receiving signals on CARRIER 1 and transmitting on CARRIER 2. As in the example of Fig. 4, each communication frame is divided into multiple time slots. Following a synchronization slot, two slots are preferably respectively allocated for units 70 and 80 to transmit two channels of data, so as to communicate with one another and with any peripheral units, such as keyboard 30, shown in Fig. 1. Thereafter, time slots (marked P1, P2 and P3) are allocated to the peripheral units, to communicate with units 70 and 80. It will be understood that greater or lesser numbers of time slots, data channels and peripheral units may similarly be used.

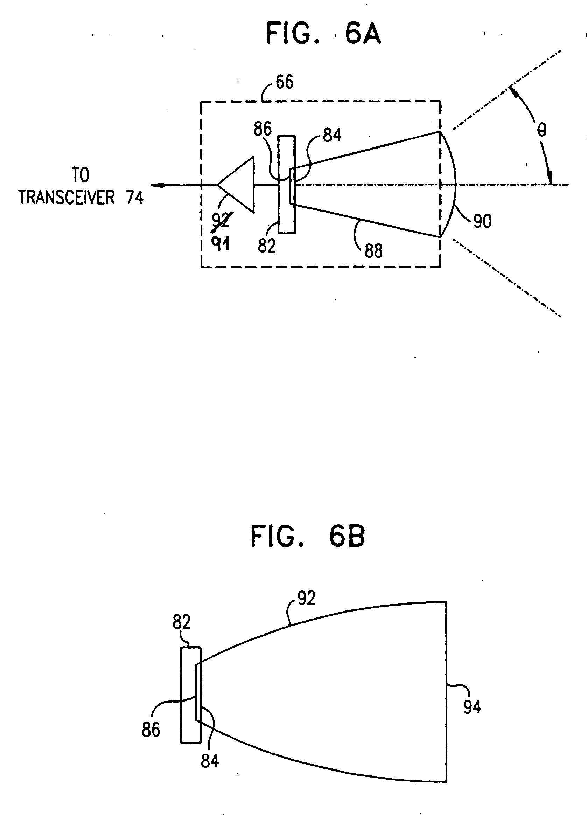

Fig. 6A is a schematic illustration showing details of IR receiver 66. Receiver 66 is shown in Fig. 6A as communicating with transceiver 74, shown in Figs. 5A and 5B, but it will be understood that this receiver may equally be used in any of the other base or remote units described herein.

Receiver 66 comprises a photodiode 82, which includes an optically active area 86, and whose output is preferably coupled via a preamplifier 91 to transceiver 74. A non-imaging dielectric totally-internally- reflecting concentrator 88 is optically coupled at an exit surface 84 thereof to area 86, preferably using a suitable optical bonding material. Concentrator 88 preferably comprises an optical plastic having a refractive index in the range 1.45 to 1.65, such as acrylic or polycarbonate, or alternatively may comprise an optical glass or other suitable dielectric material. Bonding material 84 preferably comprises optical epoxy or UV-cured optical cement, as are known in the art, and is chosen to give good index matching between concentrator 88 and active area 86 in order to reduce reflection losses. Alternatively, the entire assembly of receiver 66 may be molded as an integral unit, preferably by methods of injection molding known in the art.

Concentrator 88 has an acceptance angle θ, as shown in Fig. 6A, which is designed to meet the needs of a diffuse IR communications link, in accordance with preferred embodiments of the present invention, by proper selection of the shape of the concentrator and of an entrance surface 90 of the concentrator. In Fig. 6A, surface 90 is convex, so as to reduce the overall size of concentrator 88 while providing a relatively large acceptance angle, but a flat entrance surface may also be used. IR light passing through surface 90 undergoes total internal reflection at the side walls of concentrator 88, with the result that the concentrator has a high, substantially uniform light collection efficiency over substantially the entire acceptance angle. Preferably, concentrator 88 is designed to give θ in the range of 40-50° (half angle), which has been found to be optimal for diffuse IR communication links such as link 20 (Fig. 1) or link 40 (Fig. 2).

Although photodiodes with integral lenses are known in the art, their collection efficiency is typically non-uniform and may drop substantially at angles away from the optical axis. Such non-uniform response tends to cause poor and/or inconsistent reception in diffuse IR systems. By providing substantially uniform reception over a wide angle, receiver 66 using concentrator 88 improves the signal/noise ratio, reliability and insensitivity to angular alignment of IR communication links such as those described hereinabove.

Fig. 6B is a schematic illustration showing a compound parabolic concentrator 92, coupled to photodiode 82. Concentrator 92 has a generally flat entrance surface 94 and paraboloidal side walls. Light entering through surface 94 is concentrated onto active area 86 by internal reflection at the side walls, providing a high degree of concentration. Concentrator 92 is preferably produced and bonded to photodiode 82 substantially as described above with reference to concentrator 88.

Other types of concentrators may also be designed based on the principles of concentrators 88 and 92. For example, an astigmatic concentrator (not shown in the figures) may be designed to concentrate radiation in only one angular direction, but not in an orthogonal direction, in a manner similar to a cylindrical lens, or to concentrate radiation over a different acceptance angle in one direction than in the other. Alternatively or additionally, multiple photodiodes, each with its own concentrator and pointed in different directions, may be used together to provide wider angular coverage. It will further be appreciated that similar concentrators may be coupled to a LED or laser diode emitter in transmitter 64, in order to give uniform, wide-angle IR output therefrom. Such concentrators may be used in any of base or remote IR communication units 22, 24, 26, 42, 70 or 80, as described hereinabove, as well as in other diffuse IR communication links in accordance with the principles of the present invention.

Although the preferred embodiments described hereinabove refer primarily to IR communications between a base unit (coupled to a telephone line) and a computer or Web-enabled television, the principles of the present invention may similarly be applied to afford omni-directional IR communications capabilities in other areas. These areas include:
- Interactive toys, wherein a central control unit, such as a personal computer with an IR communications unit and a CD-ROM or other suitable memory drive, is used to activate and control one or more electrically-powered toys, both the control unit and the toys having suitable IR ports.
- Home appliances, having IR ports to enable interactive control and reporting of operational data to one another and/or to a central control unit accessible to a human operator.
- Home communications and control systems, including audiovisual systems and appliances, as described hereinabove, as well as home (or office/factory) security systems. The central control unit may be coupled directly by omni-directional IR link to the other elements of the system or, alternatively, a control unit at a remote location may communicate with the elements of the system over a telephone connection to a base unit, such as unit 22, in IR communication with the other elements.

It will be appreciated that the application areas and preferred embodiments described above are cited by way of example, and the full scope of the invention is limited only by the claims.

## Claims

1. A wireless communication link (20)(40) for use in an enclosed indoor space having interior surfaces (34) capable of reflecting infrared radiation, comprising:
a base unit (22)(70) configured to omni-directionally transmit diffuse infrared radiation, modulated responsive to received electrical signals, and to receive modulated infrared radiation reflected off interior surfaces (34) of the indoor space and transmit electrical signals responsive to the received infrared radiation; and
at least one remote unit (24)(42)(80) configured to communicate with the base unit (22)(70), the at least one remote unit being configured to receive modulated infrared radiation transmitted by the base unit (22)(70) and reflected off the interior surfaces (34) of the enclosed indoor space and omni-dircctionally transmit modulated diffuse infrared radiation for reflection off interior surfaces (34) of the enclosed indoor space to the base unit (22)(70);
**characterized in that** the base unit (22)(70) is configured to be connected to a telephone line (32) and transmit and receive said electrical signals to and from the telephone line (32), and **in that** the at least one remote unit (24)(42)(80) is configured to be connected to an audiovisual device (28)(50).

2. A link (20)(40) according to claim 1, wherein the at least one remote unit (24)(42)(80) comprises a plurality of remote units.

3. A link (20)(40) according to claim 2, wherein the base unit (22)(70) and the plurality of remote units (24)(42)(80) are configured to communicate using a TDMA scheme.

4. A link (20)(40) according to claim 2, wherein at least one of the plurality of remote units (24)(42)(80) is configured to be connected to a peripheral device.

5. A link (20)(40) according to claim 4, wherein the peripheral device comprises a user interface device.

6. A link (20)(40) according to claim 4, wherein the peripheral device comprises a digital camera (27).

7. A link (20)(40) according to any of claims 1-6, wherein the audiovisual device comprises a web-cnabled television (28).

8. A link (20)(40) according to any of claims 1-6, wherein the audiovisual device comprises a personal computer (50).

9. A link (20)(40) according to any of claims 1-6, wherein the audiovisual device comprises a personal digital assistant.

10. A communication link comprising a telephone line (32) and a wireless communication link (20)(40) according to any of claims 1-6, wherein the telephone line (32) is configured to couple the base unit to a telephone network

11. A communication link comprising a telephone line (32) and a wireless communication link (20)(40) according to any of claims 1-6, wherein the telephone line (32) is configured to couple the base unit to the Internet.

12. A link (20)(40) according to any of claims 1-6, wherein the base unit (22)(70) and the at least one remote unit (24)(42)(80) are configured to transmit and receive data at a rate greater than or equal to 1 Mbps.

13. A link (20)(40) according to any of claims 1-6, wherein the base unit (22)(70) and the at least one remote unit (24)(42)(80) are configured to transmit and receive data in a half-duplex mode.

14. A link (20)(40) according to any of claims 1-6, wherein the base unit (22)(70) and the at least one remote unit (24)(42)(80) are configured to transmit and receive data in a full-duplex mode.

15. A method for linking an audiovisual device (28)(50) in an enclosed indoor space having interior surfaces (34) capable of reflecting infrared radiation, comprising:
receiving electrical signals at a base unit (22)(70);
omni-directionally transmitting diffuse infrared radiation from the base unit (22)(70), modulated responsive to received electrical signals;
receiving at the base unit (22)(70) modulated infrared radiation reflected off interior surfaces (34) of the indoor space;
transmitting electrical signals responsive to the received infrared radiation at the base unit (22)(70);
receiving at at least one remote unit (24)(42)(80) modulated infrared radiation transmitted by the base unit (22)(70) and reflected off the interior surfaces (34) of the enclosed indoor space; and
omni-directionally transmitting from the at least one remote unit (24)(42)(80) modulated diffuse infrared radiation for reflection off interior surfaces (34) of the enclosed indoor space to the base unit (22)(70);
**characterized in that**:
the steps of transmitting and receiving said electrical signals at the base unit (22)(70) comprises transmitting and receiving said electrical signals to and from a telephone line (32); and
the at least one remote unit (24)(42)(80) is connected to, and communicates with, the audiovisual device (28)(50).

16. A method according to claim 15, wherein transmitting and receiving diffuse radiation comprises transmitting and receiving radiation in the absence of a line of sight between the at least one remote unit (24)(42)(80) and the base unit (22)(70).

17. A method according to claim 15, wherein transmitting the diffuse radiation comprises coding the electrical signals to produce infrared pulses, and receiving the diffuse radiation comprises decoding the infrared pulses to produce electrical signals.

18. A method according to claim 15, wherein omni-directionally transmitting diffuse infrared radiation from a base unit (22)(70) and receiving at the base unit modulated infrared radiation comprises transmitting radiation to and receiving radiation from a plurality of remote units.

19. A method according to claim 18, wherein receiving at the base unit modulated infrared radiation comprises receiving radiation transmitted from a remote unit connected to a peripheral device.

20. A method according to claim 19, wherein the peripheral device comprises a digital camera (27).

21. A method according to claim 18, wherein receiving at the base unit modulated infrared radiation comprises receiving radiation transmitted from a remote unit connected to a user interface device.

22. A method according to claim 18, wherein transmitting and receiving the radiation comprises transmitting and receiving radiation during predetermined time slots using a carrier-wave-bascd modulation scheme.

23. A method according to claim 18, wherein transmitting and receiving the radiation comprises transmitting and receiving radiation using a TDMA scheme.

24. A method according to any of claims 15-23, wherein transmitting and receiving the radiation comprises transmitting and receiving in a half-duplex mode.

25. A method according to any of claims 15-23, wherein transmitting and receiving the radiation comprises transmitting and receiving in a full-duplex mode.

26. A method according to any of claims 15-23, wherein transmitting and receiving the electrical signals comprises transmitting signals to and receiving signals from a telephone network.

27. A method according to any of claims 15-23, wherein transmitting and receiving the electrical signals comprises transmitting signals to and receiving signals from the Internet.

28. A method according to any of claims 15-23, wherein the audiovisual device comprises a television (28).

29. A method according to any of claims 15-23, wherein the audiovisual device comprises a personal computer (50).

30. A method according to any of claims 15-23, wherein the audiovisual device comprises a personal digital assistant.

31. A method according to any of claims 15-23, wherein transmitting and receiving the infrared radiation comprises transmitting and receiving data at a rate greater than or equal to 1 Mbps.

32. A method according to any of claims 15-23, wherein transmitting and receiving the infrared radiation comprises transmitting and receiving radiation between an outlet of the telephone line and the remote unit (24)(42)(80) without the use of a relay transmitter therebetween.

## Patentansprüche

1. Drahtlose Fernmeldeverbindung (20)(40) zur Verwendung in einem geschlossenen Innenraum mit Innenflächen (34), die Infrarotstrahlung reflektieren können, umfassend:
eine Basisgeräteeinheit (22)(70), die dafür konfiguriert ist, in alle Richtungen eine diffuse Infrarotstrahlung zu senden, die moduliert ist, um auf empfangene elektrische Signale zu reagieren und eine modulierte Infrarotstrahlung zu empfangen, die von den Innenflächen (34) des Innenraums reflektiert wird, sowie elektrische Signale zu senden, die auf die empfangene Infrarotstrahlung reagieren; und
mindestens eine entfernt aufgestellte Geräteeinheit (24)(42)(80), die dafür konfiguriert ist, mit der Basisgeräteeinheit (22)(70) zu kommunizieren, wobei mindestens eine entfernt aufgestellte Geräteeinheit dafür konfiguriert ist, eine modulierte Infrarotstrahlung zu empfangen, die von der Basisgeräteeinheit (22)(70) gesendet und von den Innenflächen (34) des geschlossenen Innenraumes reflektiert wird, sowie in alle Richtungen eine modulierte diffuse Infrarotstrahlung zur Reflektion von den Innenflächen (34) des geschlossenen Innenraumes zur Basisgeräteeinheit (22)(70) zu senden;
**dadurch gekennzeichnet, dass** die Basisgeräteeinheit (22)(70) dafür konfiguriert ist, an eine Telefonleitung (32) angeschlossen zu werden sowie die elektrischen Signale zu und von der Telefonleitung (32) zu senden und zu empfangen, und dass mindestens eine entfernt aufgestellte Geräteeinheit (24)(42)(80) dafür konfiguriert ist, an ein audiovisuelles Gerät (28)(50) angeschlossen zu werden.

2. Verbindung (20)(40) nach Anspruch 1, **dadurch gekennzeichnet, dass** mindestens eine entfernt aufgestellte Geräteeinheit (24)(42)(80) eine Mehrzahl von entfernt aufgestellten Geräteeinheiten umfasst.

3. Verbindung (20)(40) nach Anspruch 2, **dadurch gekennzeichnet, dass** die Basisgeräteeinheit (22)(70) und die Mehrzahl der entfernt aufgestellten Geräteeinheiten (24)(42)(80) dafür konfiguriert sind, unter Verwendung eines Vielfachzugriffsystems mit Zeitteilung miteinander zu kommunizieren.

4. Verbindung (20)(40) nach Anspruch 2, **dadurch gekennzeichnet, dass** mindestens eine Einheit aus einer Mehrzahl von entfernt aufgestellten Geräteeinheiten (24)(42)(80) dafür konfiguriert ist, an ein Peripheriegerät angeschlossen zu werden.

5. Verbindung (20)(40) nach Anspruch 4, **dadurch gekennzeichnet, dass** das Peripheriegerät ein Nutzerschnittstellengerät umfasst.

6. Verbindung (20)(40) nach Anspruch 4, **dadurch gekennzeichnet, dass** das Peripheriegerät eine Digitalkamera (27) umfasst.

7. Verbindung (20)(40) nach einem der Ansprüche 1 - 6, **dadurch gekennzeichnet, dass** das audiovisuelle Gerät ein Fernsehgerät (28) mit Zugangsmöglichkeit zum World Wide Web umfasst.

8. Verbindung (20)(40) nach einem der Ansprüche 1 - 6, **dadurch gekennzeichnet, dass** das audiovisuelle Gerät einen persönlichen Computer (50) umfasst.

9. Verbindung (20)(40) nach einem der Ansprüche 1 - 6, **dadurch gekennzeichnet, dass** das audiovisuelle Gerät einen Personal Digital Assistant umfasst.

10. Fernmeldeverbindung, die eine Telefonleitung (32) und eine drahtlose Fernmeldeverbindung (20)(40) umfasst, nach einem der Ansprüche 1 - 6, **dadurch gekennzeichnet, dass** die Telefonleitung (32) dafür konfiguriert ist, die Basisgeräteeinheit an das Telefonnetz anzuschließen.

11. Fernmeldeverbindung, die eine Telefonleitung (32) und eine drahtlose Fernmeldeverbindung (20)(40) umfasst, nach einem der Ansprüche 1 - 6, **dadurch gekennzeichnet, dass** die Telefonleitung (32) dafür konfiguriert ist, die Basisgeräteeinheit an das Internet anzuschließen.

12. Verbindung (20)(40) nach einem der Ansprüche 1 - 6, **dadurch gekennzeichnet, dass** die Basisgeräteeinheit (22)(70) und mindestens eine entfernt aufgestellte Geräteeinheit (24)(42)(80) dafür konfiguriert sind, Daten mit einer größeren Geschwindigkeit als 1 Mbps oder mit einer Geschwindigkeit, die gleich 1 Mbps ist, zu senden und zu empfangen.

13. Verbindung (20)(40) nach einem der Ansprüche 1 - 6, **dadurch gekennzeichnet, dass** die Basisgeräteeinheit (22)(70) und mindestens eine entfernt aufgestellte Geräteeinheit (24)(42)(80) dafür konfiguriert sind, Daten im Halbduplexbetrieb zu senden und zu empfangen.

14. Verbindung (20)(40) nach einem der Ansprüche 1 - 6, **dadurch gekennzeichnet, dass** die Basisgeräteeinheit (22)(70) und mindestens eine entfernt aufgestellte Geräteeinheit (24)(42))80) dafür konfiguriert sind, Daten im Vollduplexbetrieb zu senden und zu empfangen.

15. Verfahren zum Anschließen eines audiovisuellen Gerätes (28)(50) in einem geschlossenen Innenraum mit Innenflächen (34), die Infrarotstrahlung reflektieren können, das folgende Aktivitäten umfasst:
Empfangen elektrischer Signale in einer Basisgeräteeinheit (22)(70);
Senden einer diffusen Infrarotstrahlung in alle Richtungen von der Basisgeräteeinheit (22)(70) aus, die dafür moduliert ist, auf empfangene elektrische Signale zu reagieren;
Empfangen einer modulierten Infrarotstrahlung in der Basisgeräteeinheit (22)(70), die von den Innenflächen (34) des Innenraumes reflektiert wird;
Senden elektrischer Signale, die auf die in der Basisgeräteeinheit (22)(70) empfangene Infrarotstrahlung reagieren;
Empfangen einer modulierten Infrarotstrahlung in mindestens einer entfernt aufgestellten Geräteeinheit (24)(42)(80), die von der Basisgeräteeinheit (22)(70) gesendet und von den Innenflächen (34) des geschlossenen Innenraumes reflektiert wird; und
Senden einer modulierten diffusen Infrarotstrahlung in alle Richtungen aus mindestens einer entfernt aufgestellten Geräteeinheit (24)(42)(80) zur Reflektion von den Innenflächen (34) des geschlossenen Innenraumes in Richtung zur Basisgeräteeinheit (22)(70);
**dadurch gekennzeichnet, dass**
die Verfahrensschritte des Sendens und Empfangens der elektrischen Signale in der Basisgeräteeinheit (22)(70) das Senden und Empfangen der elektrischen Signale zur und von der Telefonleitung (32) in sich einschließen; und
mindestens eine entfernt aufgestellte Geräteeinheit (24)(42)(80) an das audiovisuelle Gerät (28)(50) angeschlossen ist und mit ihm kommuniziert.

16. Verfahren nach Anspruch 15, **dadurch gekennzeichnet, dass** das Senden und Empfangen einer diffusen Strahlung das Senden und Empfangen einer Strahlung bei Fehlen einer Sichtlinie zwischen mindestens einer entfernt aufgestellten Geräteeinheit (24)(42)(80) und der Basisgeräteeinheit (22)(70) in sich einschließen.

17. Verfahren nach Anspruch 15, **dadurch gekennzeichnet, dass** das Senden der diffusen Strahlung das Codieren der elektrischen Signale in sich einschließt, um Infrarotimpulse zu erzeugen, und das Empfangen der diffusen Strahlung das Decodieren der Infrarotimpulse in sich einschließt, um elektrische Signale zu erzeugen.

18. Verfahren nach Anspruch 15, **dadurch gekennzeichnet, dass** das Senden einer diffusen Infrarotstrahlung in alle Richtungen aus einer Basisgeräteeinheit (22)(70) und das Empfangen einer modulierten Infrarotstrahlung in der Basisgeräteeinheit das Senden einer Strahlung zu und das Empfangen einer Strahlung von einer Mehrzahl von entfernt aufgestellten Geräteeinheiten in sich einschließt.

19. Verfahren nach Anspruch 18, **dadurch gekennzeichnet, dass** das Empfangen einer modulierten Infrarotstrahlung in der Basisgeräteeinheit das Empfangen einer Strahlung einschließt, die von einer entfernt aufgestellten Geräteeinheit gesendet wird, die an ein Peripheriegerät angeschlossen ist.

20. Verfahren nach Anspruch 19, **dadurch gekennzeichnet, dass** das Peripheriegerät eine Digitalkamera (27) einbezieht.

21. Verfahren nach Anspruch 18, **dadurch gekennzeichnet, dass** das Empfangen einer modulierten Strahlung in der Basisgeräteeinheit das Empfangen einer Strahlung einschließt, die von einem Nutzerschnittstellengerät gesendet wird.

22. Verfahren nach Anspruch 18, **dadurch gekennzeichnet, dass** das Senden und Empfangen der Strahlung das Senden und Empfangen von Strahlung in vorgegebenen Zeitschlitzen unter Verwendung eines Trägerwellenmodulationssystems in sich einschließen.

23. Verfahren nach Anspruch 18, **dadurch gekennzeichnet, dass** das Senden und Empfangen der Strahlung das Senden und Empfangen von Strahlung unter Verwendung eines Vielfachzugriffsystems mit Zeitteilung in sich einschließen.

24. Verfahren nach einem der Ansprüche 15 - 23, **dadurch gekennzeichnet, dass** das Senden und Empfangen der Strahlung das Senden und Empfangen im Halbduplexbetrieb in sich einschließen.

25. Verfahren nach einem der Ansprüche 15-23, **dadurch gekennzeichnet, dass** das Senden und Empfangen der Strahlung das Senden und Empfangen im Vollduplexbetrieb in sich einschließen.

26. Verfahren nach einem der Ansprüche 15 - 23, **dadurch gekennzeichnet, dass** das Senden und Empfangen der elektrischen Signale das Senden von Signalen zu und das Empfangen von Signalen von einem Telefonnetz in sich einschließen.

27. Verfahren nach einem der Ansprüche 15 - 23, **dadurch gekennzeichnet, dass** das Senden und Empfangen der elektrischen Signale das Senden von Signalen zum und das Empfangen von Signalen aus dem Internet in sich einschließen.

28. Verfahren nach einem der Ansprüche 15 - 23, **dadurch gekennzeichnet, dass** das audiovisuelle Gerät ein Fernsehgerät einbezieht (28).

29. Verfahren nach einem der Ansprüche 15 - 23, **dadurch gekennzeichnet, dass** das audiovisuelle Gerät einen persönlichen Computer einbezieht (50).

30. Verfahren nach einem der Ansprüche 15 - 23, **dadurch gekennzeichnet, dass** das audiovisuelle Gerät einen Personal Digital Assistant einbezieht.

31. Verfahren nach einem der Ansprüche 15 - 23, **dadurch gekennzeichnet, dass** das Senden und Empfangen der Infrarotstrahlung das Senden und Empfangen von Daten mit einer größeren Geschwindigkeit als 1 Mbps oder mit einer Geschwindigkeit gleich 1 Mbps in sich einschließen.

32. Verfahren nach einem der Ansprüche 15 - 23, **dadurch gekennzeichnet, dass** das Senden und Empfangen der Infrarotstrahlung das Senden und Empfangen einer Strahlung zwischen der Anschlussdose einer Telefonleitung und der entfernt aufgestellten Geräteeinheit (24)(42)(80) in sich einschließen, ohne dazwischen einen Relaissender zu verwenden.

## Revendications

1. Liaison de communication sans fil (20) (40) pour l'utilisation dans un espace intérieur clos ayant des surfaces intérieures (34) capables de réfléchir un rayonnement infrarouge, comprenant :
une unité de base (22) (70) configurée pour émettre omnidirectionnellement un rayonnement infrarouge diffus, modulé en réponse à des signaux électriques reçus, et pour recevoir un rayonnement infrarouge modulé réfléchi par des surfaces intérieures (34) de l'espace intérieur et émettre des signaux électriques en réponse au rayonnement infrarouge reçu ; et
au moins une unité distante (24)(42)(80) configurée pour communiquer avec l'unité de base (22)(70), la au moins une unité distante étant configurée pour recevoir un rayonnement infrarouge modulé émis par l'unité de base (22) (70) et réfléchi par les surfaces intérieures (34) de l'espace intérieur clos et émettre omnidirectionnellement un rayonnement infrarouge diffus modulé pour la réflexion par des surfaces intérieures (34) de l'espace intérieur clos vers l'unité de base (22) (70) ;
**caractérisée en ce que** l'unité de base (22)(70) est configurée pour être connectée à une ligne téléphonique (32) et émettre et recevoir lesdits signaux électriques vers et depuis la ligne téléphonique (32), et **en ce que** la au moins une unité distante (24)(42)(80) est configurée pour être connectée à un dispositif audiovisuel (28)(50).

2. Liaison (20) (40) selon la revendication 1, dans laquelle la au moins une unité distante (24)(42)(80) comprend une pluralité d'unités distantes.

3. Liaison (20)(40) selon la revendication 2, dans laquelle l'unité de base (22)(70) et la pluralité d'unités distantes (24)(42)(80) sont configurées pour communiquer en utilisant un schéma TDMA (AMRT).

4. Liaison (20)(40) selon la revendication 2, dans laquelle au moins une de la pluralité d'unités distantes (24)(42)(80) est configurée pour être connectée à un dispositif périphérique.

5. Liaison (20)(40) selon la revendication 4, dans laquelle le dispositif périphérique comprend un dispositif d'interface utilisateur.

6. Liaison (20)(40) selon la revendication 4, dans laquelle le dispositif périphérique comprend une caméra numérique (27).

7. Liaison (20) (40) selon l'une quelconque des revendications 1 à 6, dans laquelle le dispositif audiovisuel comprend une télévision optimisée Web (28).

8. Liaison (20)(40) selon l'une quelconque des revendications 1 à 6, dans laquelle le dispositif audiovisuel comprend un ordinateur personnel (50).

9. Liaison (20) (40) selon l'une quelconque des revendications 1 à 6, dans laquelle le dispositif audiovisuel comprend un assistant numérique personnel.

10. Liaison de communication comprenant une ligne téléphonique (32) et une liaison de communication sans fil (20) (40) selon l'une quelconque des revendications 1 à 6, dans laquelle la ligne téléphonique (32) est configurée pour coupler l'unité de base à un réseau téléphonique.

11. Liaison de communication comprenant une ligne téléphonique (32) et une liaison de communication sans fil (20) (40) selon l'une quelconque des revendications 1 à 6, dans laquelle la ligne téléphonique (32) est configurée pour coupler l'unité de base à Internet.

12. Liaison (20)(40) selon l'une quelconque des revendications 1 à 6, dans laquelle l'unité de base (22)(70) et la au moins une unité distante (24)(42)(80) sont configurées pour transmettre et recevoir des données à un débit supérieur ou égal à 1 Mbps.

13. Liaison (20) (40) selon l'une quelconque des revendications 1 à 6, dans laquelle l'unité de base (22)(70) et la au moins une unité distante (24) (42) (80) sont configurées pour transmettre et recevoir des données dans un mode semi-duplex.

14. Liaison (20)(40) selon l'une quelconque des revendications 1 à 6, dans laquelle l'unité de base (22)(70) et la au moins une unité distante (24)(42)(80) sont configurées pour transmettre et recevoir des données dans un mode duplex intégral.

15. Procédé pour relier un dispositif audiovisuel (28)(50) dans un espace intérieur clos ayant des surfaces intérieures (34) capables de réfléchir un rayonnement infrarouge, comprenant :
la réception de signaux électriques au niveau d'une unité de base (22) (70) ;
l'émission omnidirectionnelle d'un rayonnement infrarouge diffus depuis l'unité de base (22) (70), modulé en réponse à des signaux électriques reçus ;
la réception au niveau de l'unité de base (22)(70) d'un rayonnement infrarouge modulé réfléchi par des surfaces intérieures (34) de l'espace intérieur ;
l'émission de signaux électriques en réponse au rayonnement infrarouge reçu au niveau de l'unité de base (22)(70) ;
la réception au niveau d'au moins une unité distante (24) (42) (80) d'un rayonnement infrarouge modulé émis par l'unité de base (22) (70) et réfléchi par les surfaces intérieures (34) de l'espace intérieur clos ; et
l'émission omnidirectionnelle depuis la au moins une unité distante (24) (42) (80) d'un rayonnement infrarouge diffus modulé pour la réflexion par des surfaces intérieures (34) de l'espace intérieur clos vers l'unité de base (22)(70) ;
**caractérisé en ce que** :
les étapes d'émission et de réception desdits signaux électriques au niveau de l'unité de base (22)(70) comprennent l'émission et la réception desdits signaux électriques vers et depuis une ligne téléphonique (32) ; et
la au moins une unité distante (24)(42)(80) est connectée à, et communique avec, le dispositif audiovisuel (28)(50).

16. Procédé selon la revendication 15, dans lequel l'émission et la réception d'un rayonnement diffus comprennent l'émission et la réception d'un rayonnement en l'absence d'un champ de visibilité entre la au mois une unité distante (24) (42) (80) et l'unité de base (22) (70).

17. Procédé selon la revendication 15, dans lequel l'émission du rayonnement diffus comprend le codage des signaux électriques pour produire des impulsions infrarouges, et la réception du rayonnement diffus comprend le décodage des impulsions infrarouges pour produire des signaux électriques.

18. Procédé selon la revendication 15, dans lequel l'émission omnidirectionnelle d'un rayonnement infrarouge diffus depuis une unité de base (22) (70) et la réception au niveau de l'unité de base d'un rayonnement infrarouge modulé comprend l'émission du rayonnement vers et la réception du rayonnement depuis une pluralité d'unités distantes.

19. Procédé selon la revendication 18, dans lequel la réception au niveau de l'unité de base d'un rayonnement infrarouge modulé comprend la réception d'un rayonnement émis depuis une unité distante connectée à un dispositif périphérique.

20. Procédé selon la revendication 19, dans lequel le dispositif périphérique comprend une caméra numérique (27).

21. Procédé selon la revendication 18, dans lequel la réception au niveau de l'unité de base d'un rayonnement infrarouge modulé comprend la réception d'un rayonnement émis depuis une unité distante connectée à un dispositif d'interface utilisateur.

22. Procédé selon la revendication 18, dans lequel l'émission et la réception du rayonnement comprennent l'émission et la réception du rayonnement durant des tranches de temps prédéterminées en utilisant un schéma de modulation basé sur les ondes porteuses.

23. Procédé selon la revendication 18, dans lequel l'émission et la réception du rayonnement comprennent l'émission et la réception du rayonnement en utilisant un schéma TDMA (AMRT).

24. Procédé selon l'une quelconque des revendications 15 à 23, dans lequel l'émission et la réception du rayonnement comprennent l'émission et la réception dans un mode semi-duplex.

25. Procédé selon l'une quelconque des revendications 15 à 23, dans lequel l'émission et la réception du rayonnement comprennent l'émission et la réception dans un mode duplex intégral.

26. Procédé selon l'une quelconque des revendications 15 à 23, dans lequel l'émission et la réception des signaux électriques comprennent l'émission des signaux vers et la réception des signaux depuis un réseau téléphonique.

27. Procédé selon l'une quelconque des revendications 15 à 23, dans lequel l'émission et la réception des signaux électriques comprennent l'émission des signaux vers et la réception des signaux depuis Internet.

28. Procédé selon l'une quelconque des revendications 15 à 23, dans lequel le dispositif audiovisuel comprend une télévision (28).

29. Procédé selon l'une quelconque des revendications 15 à 23, dans lequel le dispositif audiovisuel comprend un ordinateur personnel (50).

30. Procédé selon l'une quelconque des revendications 15 à 23, dans lequel le dispositif audiovisuel comprend un assistant numérique personnel.

31. Procédé selon l'une quelconque des revendications 15 à 23, dans lequel l'émission et la réception du rayonnement infrarouge comprennent la transmission et la réception de données à un débit supérieur ou égal à 1 Mbps.

32. Procédé selon l'une quelconque des revendications 15 à 23, dans lequel l'émission et la réception du rayonnement infrarouge comprennent l'émission et la réception d'un rayonnement entre une sortie de la ligne téléphonique et l'unité distante (24)(42)(80) sans l'utilisation d'un émetteur-relais entre celles-ci.
